(19) Europäisches Patentamt
European Patent Office
Office européen des brevets

(11) Veröffentlichungsnummer: **0 311 766 B1**

(12) **EUROPÄISCHE PATENTSCHRIFT**

(45) Veröffentlichungstag der Patentschrift: **30.10.91**

(51) Int. Cl.5: **C08G 77/06**, C08G 77/32

(21) Anmeldenummer: **88112930.8**

(22) Anmeldetag: **09.08.88**

# (54) Herstellung und Weiterverarbeitung von Mischungen mit einem hohen Anteil an Organo-cyclosiloxanen.

(30) Priorität: **14.08.87 DE 3727182**

(43) Veröffentlichungstag der Anmeldung:
**19.04.89 Patentblatt 89/16**

(45) Bekanntmachung des Hinweises auf die Patenterteilung:
**30.10.91 Patentblatt 91/44**

(84) Benannte Vertragsstaaten:
**BE DE FR GB NL**

(56) Entgegenhaltungen:
**EP-A- 0 265 780**
**FR-A- 1 428 633**
**FR-A- 2 303 846**
**GB-A- 843 273**

(73) Patentinhaber: **WACKER-CHEMIE GMBH**
**Prinzregentenstrasse 22**
**W-8000 München 22(DE)**

(72) Erfinder: **Gamon, Norbert, Dr., Dipl.-Chem.**
**Im Domherrenfeld 1**
**W-2105 Seevetal 11(DE)**
Erfinder: **Solbrig. Christian, Dr., Dipl.-Chem.**
**Roseggerstrasse 3**
**W-8261 Mehring-Öd(DE)**
Erfinder: **Braunsperger, Karl**
**Unterhadermark 86**
**W-8263 Burghausen(DE)**

**EP 0 311 766 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Herstellung und Weiterverarbeitung von Mischungen mit einem hohen Anteil an Organocyclosiloxanen, wobei diese Mischungen einen geringen Gehalt an direkt an Siliciumatome gebundenen Hydroxylgruppen aufweisen.

Bei der Darstellung von linearen Polydiorganosiloxanen aus beispielsweise Diorganodihalogensilan entstehen als Nebenprodukte Organocyclosiloxane, die aus dem Reaktionsgemisch destillativ entfernt werden können. Dieses Organocyclosiloxane enthaltende Destillat kann im Prinzip mit anderen Silanen oder Siloxanen äquilibriert und/oder kondensiert werden und somit z. B. als Ausgangsbasis zur Herstellung von Siliconen mit reaktiven Gruppen dienen.

Bei der Umsetzung solcher Destillate mit reaktive Gruppen tragenden Silanen ergab sich, daß die Produkte dieser Umsetzungen bezüglich ihrer Viskositäten je nach der Qualität der eingesetzten Destillate stark schwankten. Dies war darauf zurückzuführen, daß die genannten Destillate neben Organocyclosiloxanen auch in wechselnden Mengen kurzkettige lineare Organosiloxane enthalten, welche in den endständigen Einheiten direkt an Siliciumatome gebundene Hydroxylgruppen aufweisen.

Aufgabe der vorliegenden Erfindung war es, Organocyclosiloxane enthaltende Mischungen bereitzustellen, die sich als Ausgangsstoffe für Silicone mit reproduzierbarer Viscosität eignen. Des weiteren war es Aufgabe der vorligenden Erfindung, ein Verfahren zur Herstellung von funktionelle Gruppen tragenden Organopolysiloxanen zur Verfügung zu stellen. Die vorstehend genannten Aufgaben werden durch die vorliegende Erfindung gelöst durch ein Verfahren zur Herstellung von Organocyclosiloxanen enthaltenden Mischungen, welche geeignet sind als Ausgangsstoffe zur Herstellung von Siliconen kontrollierter Viskosität, dadurch gekennzeichnet, daß man das bei der Herstellung von linearen Organopolysiloxanen als Destillat aus dem Produktgemisch anfallende Gemisch von Organocyclosiloxanen und einem wechselnden Anteil an kurzkettigen linearen Organosiloxanen mit Kondensationskatalysator(en) behandelt, bzw. die so erhaltene Mischung mit mindestens einem funktionelle Gruppen tragenden Organosilan oder -siloxan mit jeweils mindestens einer kondensationsfähigen Gruppe umsetzt.

Die als Ausgangsstoff für die erfindungsgemäßen Verfahren zu verwendende Mischung aus Organocyclosiloxanen und kurzkettigen linearen Organosiloxanen sind vorzugsweise solche der Formel

$$R_nSiO_{\frac{4-n}{2}} \qquad (I),$$

worin

- $\underline{R}$ gleiche oder verschiedene, gegebenenfalls substituierte Kohlenwasserstoffreste mit 1 bis 18 Kohlenstoffatomen oder Hydroxylgruppen und
- $\underline{n}$ eine ganze Zahl im Werte von 0 bis 3 und einem Durchschnittswert von 1,9 bis 2,1

bedeuten.

Insbesondere besteht die als Ausgangsstoff für die erfindungsgemäßen Verfahren zu verwendende Mischung hauptsächlich aus Organocyclosiloxanen der Formel

$(R_2SiO)_x$ (II),

wobei x einen Wert von 3 bis 20 annehmen kann, und kurzkettigen linearen Organosiloxanen der Formel

$HO-(R_2SiO)_y-H$ (III),

wobei y Werte von 1 bis 20 annehmen kann und in den obigen Formeln (II) und (III) R die gleichen Bedeutungen wie in Formel (I) besitzt.

Beispiele für Reste R sind Alkylreste, wie der Methyl-Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Alkenylreste, wie der Vinylund der Allyrest; Cycloalkylreste, wie Cyclopentyl-, Cyclohexyl-, Cycloheptylreste und Methylcyclohexylreste; Arylreste, wie der Phenyl-Naphthyl- und Anthryl- und Phenanthrylrest; Alkarylrest, wie o-, m-, p-Tolylreste, Xylylreste und Ethylphenylreste; Aralkylreste, wie der Benzylrest, der alpha- und der $\beta$-Phenylethylrest;

Beispiele für substituierte Reste R sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2',-Hexafluorisopropylrest, der Heptafluorisopropylrest, und Halogenarylreste, wie der o-, m-, und p-Chlorphenylrest.

Vorzugsweise sind die Reste R $C_1$ - bis $C_3$-Alkyl-, Phenyl-und/oder Vinylreste.

Insbesondere ist bevorzugt, daß mindestens 80 %, vorzugsweise mindestens 90 % der Reste R Methylreste sind.

Die als Ausgangsstoff für die erfindungsgemäßen Verfahren zu verwendende Mischung, welche also inbesondere Organocyclosiloxane der Formel (II) und kurzkettige lineare Siloxane der Formel (III) enthält, wird, wie bereits erwähnt, in einem ersten Verfahren mit Kondensationskatalysator(en) behandelt. Beispiele für solche Kondensationskatalysatoren sind in erster Linie Stoffe, die nach der Definition von Brönstedt oder Lewis als Säuren oder Basen zu bezeichnen sind. Es sind dies heterogene Katalysatoren, wie säureaktivierte Bleicherden und Zeolithe und homogene Katalysatoren. Beispiele für homogene saure Katalysatoren sind Protonsäuren wie Schwefelsäure, Chlorsulfonsäure, Selensäure, Salpetersäure, Phosphorsäuren, Borsäure, Lewis-Säuren wie Eisen(III)-chlorid, Eisen(III)-chlorid-hexahydrat, Aluminiumchlorid, Bortrifluorid, Zinkchlorid, Zinn(IV)-chlorid, Phophornitridchloride bzw. deren Umsetzungsprodukte mit Organosilanen und/oder -siloxanen, Aluminiumsulfat, bzw. Gemische von mindestens zwei dieser Substanzen. Beispiele für basische Katalysatoren sind Alkalihydroxide, insbesondere Kalium- und Cäsiumhydroxid, Alkalisilanolate, Alkalialkoholate, quaternäre Ammoniumhydroxide wie Tetramethylammoniumhydroxid, Benzyltrimethylammoniumhydroxid, beta-Hydroxyethyltrimethylammonium-2-ethylhexoat, quaternäre Phosphoniumhydroxide wie Tetra-n-butylphosphoniumhydroxid und Tri-n-butyl-3-[tris-(trimethylsiloxy)silyl]-n-propylphosphoniumhydroxid, Kaliumamid, Amine und Amingemische sowie Gemische von mindestens zwei der als basische Katalysatoren genannten Substanzen- bzw. Substanzklassen.

Je nach Wahl der als Katalysatoren dienenden Substanzen sind deren einzusetzende Mengen verschieden.

Im erfindungsgemäßen Verfahren sind saure Katalysatoren, insbesondere Phosphornitridchloride bzw. deren Umsetzungsprodukte mit Organosilanen und/oder -siloxanen bevorzugt.

Wie der Fachmann aus der erfindungsgemäßen Aufgabenstellung unmittelbar erkennt, sind die Dosierung des Kondensationskatalysators, die Reaktionstemperatur und Reaktionszeit so zu wählen, daß zum ganz überwiegenden Teil eine Kondensationsreaktion, insbesondere also von den endständigen Silanolgruppen der Verbindungen der Formel (III), und nur zu einem möglichst geringen Teil Äquilibrierungsreaktionen, also beispielsweise eine Spaltung der Siloxanbindungen der Organocyclosiloxane auftritt.

Werden Phosphornitridchloride eingesetzt, so werden im erfindungsgemäßen Verfahren vorzugsweise 1 Gewichts-ppm bis 1000 Gewichts-ppm, insbesondere 5 Gewichts-ppm bis 100 Gewichts-ppm an Phosphornitridchloriden, jeweils bezogen auf das Gesamtgewicht der zu behandelnden Organocyclosiloxane enthaltenden Mischung, eingesetzt. Werden als Katalysatoren Umsetzungsprodukte von Phosphornitridchloriden mit Organosilanen oder Organosiloxanen eingesetzt, so ist entsprechend mehr an Katalysator einzusetzen.

Es sind Temperaturen von 0° C bis 150° C, insbesondere von 10° C bis 50° C und Reaktionszeiten von 5 min bis 48 h , insbesondere von 15 min bis 5 h bevorzugt.

Die erfindungsgemäße Behandlung mit Kondensationskatalysator(en) kann bei gegenüber Normaldruck (0,1 MPa (abs.)) erhöhtem oder erniedrigtem Druck durchgeführt werden. Drücke von 0.09 MPa (abs.) bis 0,11 MPa (abs.) sind bevorzugt.

Die Kondensationskatalysatoren werden vorzugsweise nach der Behandlung desaktiviert, falls die so behandelte Mischung längere Zeit gelagert werden soll. Unter Desaktivieren ist in dieser Hinsicht insbesondere das Entfernen aus der Mischung, beispielsweise durch Filtration, gegebenenfalls nach vorheriger Adsorption bzw. Absorption an Festkörpern, sowie die chemische Inertisierung, beispielsweise durch Neutralisation zu verstehen. Die Art der Desaktivierung kann je nach dem späteren Verwendungszweck bei Phosphornitridchloriden durch Neutralisation mit bzw. Adsorption bzw. Absorption an (mit anschließender Filtration) tertiären Aminen, n-Butyllithium, Lithiumhydroxid, Lithiumcarbonat, Natriumcarbonat, Natriumhydrogencarbonat, Kaliumcarbonat oder Kaliumhydrogencarbonat, mittels fester Oxide, Hydroxide oder Carbonate zwei- oder dreiwertiger Metalle, wie Mg, Ca, Sr, Ba, Zn, Al sowie durch basische Ionenaustauscher erfolgen. Die nach dem erfindungsgemäßen Verfahren behandelten und vorzugsweise von aktivem Kondensationskatalysator weitgehend befreiten Mischungen besitzen im allgemeinen nicht mehr als 0,1 % an Si-gebundenen Hydroxylgruppe (bestimmt nach Zerewitinoff).

Die so erhaltenen Gemische können zur Herstellung von allen Polyorganosiloxanen verwendet werden, die auch bisher unter Verwendung von Organocyclosiloxanen hergestellt werden konnten. Beispiele solcher Polyorganosiloxane sind α,ω-Bis-trimethylsiloxypolydimethylsiloxane; α,ω-Dihydroxypolydimethylsiloxane; α,ω-Dialkoxypolydimethylsiloxane und vor allem funktionelle Gruppe tragende Polyorganosiloxane. Als

funktionelle Gruppen kommen insbesondere Si-C-gebundene Amino- und/oder Mercaptoreste und/oder Epoxidfunktionen tragende Gruppen, Vinyl- und Allylreste, Si-C-gebundene Ether und Polyether, Säuren, Lactone und Lactame in Frage.

Bevorzugte Beispiele für solche Gruppen sind die Vinyl-, N-(2-Aminoethyl)-3-aminopropyl-, gamma-Aminopropyl-, gamma-(Cyclohexylamino)propyl-, N-Morpholinopropyl- , Glycidoxypropyl-, Mercaptopropyl- und Methacryloxypropylgruppen.

Diese funktionelle Gruppen tragenden Organopolysiloxane können hergestellt werden, indem man die auf vorstehende Weise behandelten Gemische, welche Organocyclosiloxane enthalten, mit mindestens einem funktionelle Gruppen tragenden Organosilan oder -siloxan umsetzt, wobei das Organosilan oder -siloxan jeweils mindestens eine kondensationsfähige Gruppe besitzt. Beispiele für solche kondensationsfähigen Gruppen sind Alkoxygruppen wie die Methoxy- und Ethoxygruppen, Halogenreste, insbesondere Si-gebundene Chloratome und Acyloxyreste, wie der Acetoxyrest. Bevorzugt sind wegen ihrer leichteren Zugänglichkeit Methoxy-, Ethoxy-, Methoxyethoxy-, Acetoxy- und Chlorreste.

Die erfindungsgemäß behandelten Mischungen werden vorzugsweise mit Silanen der Formel

$$R_q R'_r SiX_{(4-q-r)} \quad (IV)$$

oder mit Teilhydrolysaten solcher Silane umgesetzt, wobei in obiger Formel (IV)

R die für die Formel (I) angegebene Bedeutung hat,

$\underline{R}'$ gleiche oder verschiedene, Si-C-gebundene Reste bedeuten, die aus Wasserstoff -, bis zu 10 Kohlenstoffatomen und gegebenenfalls Stickstoff-, Sauerstoff- und/oder Schwefelatomen aufgebaut sind;

$\underline{X}$ gleiche oder verschiedene kondensationsfähige Gruppen, vorzugsweise Methoxy-, Ethoxy-, Methoxyethoxy-, Acetoxy-oder Chlorgruppen sind;

q eine ganze Zahl im Wert von 0, 1 oder 2 ist;

r eine ganze Zahl im Wert von 1, 2 oder 3 bedeutet und die Summe von q und r maximal 3 beträgt.

Vorzugsweise beträgt die Summe von q und r maximal 2.

Besonders bevorzugte Beispiele für Silane der Formel (IV) sind Vinyltrichlorsilan, Vinyltrimethoxysilan, Vinyltriethoxysilan, Vinyltris(methoxyethoxy)silan, Vinyltriacetoxysilan, beta-Aminoethyl-gamma-aminopropyltrimethoxysilan, beta-Aminoethyl-gamma-aminopropyltriethoxysilan, beta-Aminoethyl-gamma-aminopropylmethyldimethoxysilan, gamma-Aminopropyltriethoxysilan, gamma-Aminopropyltrimethoxysilan, gamma-(Cyclohexylamino) propyltriethoxysilan, gamma-(Cyclohexylamino) propyltrimethoxysilan, gamma-N-Morpholinopropyltrimethoxysilan, Methacryloxypropyl(trimethoxysilan), Mercaptopropyltrimethoxysilan, 3-(Triethoxysilylpropyl-)bernsteinsäureanhydrid, Methacryloxypropyltri(methoxyethoxy)silan, Mercaptopropyltri(methoxyethoxy)-silan, Vinylmethyldimethoxysilan, Mercaptopropylmethyldimethoxysilan, Methacryloxypropylmethyldimethoxysilan und Glycidoxypropyltriethoxysilan.

Das erfindungsgemäße Verfahren zur Herstellung von funktionelle Gruppen tragenden Polyorganosiloxanen wird vorzugsweise bei Temperaturen von 0 °C bis 250 °C, insbesondere von 50 °C bis 180 °C durchgeführt.

Drücke von 0,09 bis 0,11 MPa(abs.) sind bevorzugt.

Das Verfahren kann in Gegenwart eines inerten Lösungsmittels durchgeführt werden. Vorzugsweise enthält das Reaktionsgemisch weniger als 1 %, insbesondere weniger als 1 o/oo bezogen auf sein Gewicht an Lösungsmittel.

Vorzugsweise wird die Reaktion in Gegenwart eines die Kondensation und Äquilibrierung beschleunigenden Katalysators durchgeführt.

Beispiele für solche Katalysatoren sind bereits als Beispiele für Kondensationskatalysatoren aufgeführt.

Wird im erfindungsgemäßen Verfahren ein aminofunktionelles Silan der Formel (IV) eingesetzt, was besonders bevorzugt ist, so sind als Kondensations- und Äquilibrierungskatalysatoren basische Katalysatoren, insbesondere tertiäre Ammoniumhydroxide bevorzugt.

Die wie vorstehend beschrieben behandelten Organocyclosiloxane enthaltenden Mischungen sind, wie in den nachstehenden Beispielen gezeigt wird, den relativ teureren reinen Organocyclosiloxanen als Ausgangsstoffe zur Herstellung von funktionelle Gruppen tragenden Organopolysiloxanen ebenbürtig.

In den nachfolgenden Beispielen beziehen sich alle Mengenangaben, soweit nicht anders angegeben, auf das Gewicht. Soweit keine Temperaturen oder Drücke angegeben sind, wurde bei 25 °C bzw. 0,1 MPa-(abs.) gearbeitet. Die Bestimmung der Si-gebundenen Hydroxylgruppen erfolgte jeweils nach der Methode von Zerewitinoff.

Beispiel 1:

Zu 1000 g einer Organocyclosiloxane enthaltenden Mischung mit einem Gehalt von 0,26 Gewichts-% an Si-gebundenen Hydroxylgruppen wurden 0,08 ml einer 25 Gew.-%igen Lösung von Phosphornitridchlorid (30 ppm) in Dichlormethan gegeben und 1 h bei 25° C stehengelassen. Die trüb gewordene Mischung wurde mit 25 g $NaHCO_3$ versetzt, mit 25 g wasserfreiem $Na_2SO_4$ getrocknet und filtriert. Im Filtrat lag der Gehalt an Hydroxylgruppen unter 0,1 Gew.%.

Beispiel 2:

Zu 700 g einer Organocyclosiloxane enthaltenden Mischung mit einem Gehalt an Si-gebundenen Hydroxylgruppen von 0,26 Gew.% wurden 0,056 ml einer 25 Gew.%igen Lösung von Phosphornitridchlorid (30 ppm) in Dichlormethan gegeben, kurz gerührt und 8 h bei 25° C stehengelassen. Anschließend wurden 14 g $NaHCO_3$ zugegeben, eine Stunde gerührt und anschließend filtriert. Zu 600 g des Filtrats wurden 7,8 g N-(2-Aminoethyl)-3-aminopropyl-methyldimethoxysilan und 0,3 ml einer 40 Gew.%igen methanolischen Lösung von Benzyltrimethylammoniumhydroxid gegeben, 1 h bei 80° C gerührt und anschließend 2 h lang bei 150° C und 2 kPa(abs.) Stickstoff durch die Lösung geleitet. Als Rückstand blieben 525 g eines klaren, farblosen Öls einer Viskosität von 1 156 mPa.s bei 25° C und einer Aminzahl von 0,14. (Die Aminzahl entspricht dem Verbrauch an 1 n HCl in ml pro g Einwaage bei der Titration gegen Tetrabromphthalein).

Vergleichsbeispiel 1:

Beispiel 2 wurde wiederholt mit der Abänderung, daß kein Phosphornitridchlorid zugegeben wurde. Erhalten wurden 520 g eines klaren farblosen Öls einer Viskosität von 62 400 mPa.s bei 25° C und einer Aminzahl von 0,14.

Beispiel 3:

700 g einer von der in den vorhergehenden Beispielen verwendeten in ihrem Gehalt an Si-gebundenen Hydroxylgruppen verschiedenen Organocyclosiloxane enthaltenden Mischung wurde wie in Beispiel 2 angegeben, behandelt. Erhalten wurden 520 g eines klaren, farblosen Öls einer Viskosität von 1 038 mPa.s bei 25° C.

Vergleichsbeispiel 2:

Beispiel 3 wurde wiederholt mit der Abänderung, daß kein Phosphornitridchlorid zugegeben wurde. Erhalten wurden 515 g eines klaren, farblosen Öls einer Viskosität von 12 000 mPa.s bei 25° C.

Vergleichsbeispiel 3:

Beispiel 2 wurde wiederholt mit der Abänderung, daß statt 600 g des Filtrats der mit Phosphornitridchlorid und Natriumhydrogencarbonat behandelten Lösung 600 g Octamethylcyclotetrasiloxan eingesetzt wurde. Erhalten wurden 532 g eines klaren, farblosen Öls einer Viskosität von 946 mPa.s bei 25° C.

**Patentansprüche**
**Patentansprüche für folgende Vertragsstaaten : DE, FR, GB**

1. Verfahren zur Herstellung von Organocyclosiloxane enthaltenden Mischungen, welche geeignet sind als Ausgangsstoffe zur Herstellung von Siliconen kontrollierter Viscosität, dadurch gekennzeichnet, daß man das bei der Herstellung von linearen Organopolysiloxanen als Destillat aus dem Produktgemisch anfallende Gemisch von Organocyclosiloxanen und einem wechselnden Anteil an kurzkettigen linearen Organosiloxanen mit Kondensationskatalysator(en), ausgenommen Carbonate und Bicarbonate von Kaliüm und Cäsium, behandelt.

2. Verfahren nach Anspruch 1, dadurch gekennzeichnet, daß der (bzw. die) Kondensationskatalysator(en) anschließend desaktiviert oder aus dem genannten Gemisch entfernt werden.

3. Verfahren nach Anspruch 1 oder 2, dadurch gekennzeichnet, daß die direkt an ein Siliciumatom gebundenen organischen Gruppen der Organocyclosiloxane und kurzkettigen linearen Organosiloxane zu mindestens 80 % bezogen auf ihre Anzahl Methylgruppen sind.

4. Verfahren nach Anspruch 1, 2 oder 3, dadurch gekennzeichnet, daß als Kondensationskatalysator(en) Phosphornitridchloride eingesetzt werden.

5. Verfahren zur Herstellung funktionelle Gruppen tragender Polyorganosiloxane, dadurch gekennzeichnet, daß man die nach den Verfahren nach Anspruch 1, 2, 3 oder 4 erhaltene Mischung mit mindestens einem funktionelle Gruppen tragenden Organosilan oder -siloxan mit jeweils mindestens einer kondensationsfähigen Gruppe umsetzt.

6. Verfahren nach Anspruch 5, dadurch gekennzeichnet, daß das eingesetzte Organosilan oder -siloxan ein Silan der Formel

$R_q\, R'_r\, SiX_{(4-q-r)}$ (IV)

oder ein als Teilhydrolysat eines solchen Organosilans erhältliches Organsiloxan ist, wobei in der obigen Formel die Reste R die in Anspruch 1 angegebene Bedeutung haben,

- R' gleiche oder verschiedene, Si-C-gebundene Reste bedeuten, die aus Wasserstoff -, bis zu 10 Kohlenstoffatomen und gegebenenfalls Stickstoff-, Sauerstoff- und/oder Schwefelatomen aufgebaut sind;
- X gleiche oder verschiedene kondensationsfähige Gruppen, vorzugsweise Methoxy-, Ethoxy-, Methoxyethoxy-, Acetoxy- oder Chlorgruppen sind;
- q eine ganze Zahl im Wert von 0, l oder 2 ist;
- r eine ganze Zahl im Wert von 1, 2 oder 3 ist und die Summe von q und r maximal 3 beträgt.

7. Verfahren nach Anspruch 5 oder 6, dadurch gekennzeichnet, daß als Organosilan oder -siloxan ein aminofunktionelles Organosilan oder -siloxan eingesetzt wird.

**Patentansprüche für folgende Vertragsstaaten : BE, NL**

1. Verfahren zur Herstellung von organocyclosiloxane enthaltenden Mischungen, welche geeignet sind als Ausgangsstoffe zur Herstellung von Siliconen kontrollierter Viscosität, dadurch gekennzeichnet, daß man das bei der Herstellung von linearen Organopolysiloxanen als Destillat aus dem Produktgemisch anfallende Gemisch von Organocyclosiloxanen und einem wechselnden Anteil an kurzkettigen linearen Organosiloxanen mit Kondensationskatalysator(en) behandelt.

2. Verfahren nach Anspruch 1, dadurch gekennzeichnet, daß der (bzw. die) Kondensationskatalysator(en) anschließend desaktiviert oder aus dem genannten Gemisch entfernt werden.

3. Verfahren nach Anspruch 1 oder 2, dadurch gekennzeichnet, daß die direkt an ein Siliciumatom gebundenen organischen Gruppen der organocyclosiloxane und kurzkettigen linearen Organosiloxane zu mindestens 80 % bezogen auf ihre Anzahl Methylgruppen sind.

4. Verfahren nach Anspruch 1, 2 oder 3, dadurch gekennzeichnet, daß als Kondensationskatalysator(en) Phosphornitridchloride eingesetzt werden.

5. Verfahren zur Herstellung funktionelle Gruppen tragender Polyorganosiloxane, dadurch gekennzeichnet, daß man die nach den Verfahren nach Anspruch 1, 2, 3 oder 4 erhältliche Mischung mit mindestens einem funktionelle Gruppen tragenden Organosilan oder -siloxan mit jeweils mindestens einer kondensationsfähigen Gruppe umsetzt.

6. Verfahren nach Anspruch 5, dadurch gekennzeichnet, daß das eingesetzte Organosilan oder -siloxan ein Silan der Formel

$R_q\, R'_r\, SiX_{(4-q-r)}$ (IV)

oder ein als Teilhydrolysat eines solchen Organosilans erhältliches Organsiloxan ist, wobei in der obigen Formel die Reste R die in Anspruch 1 angegebene Bedeutung haben,

R' gleiche oder verschiedene, Si-C-gebundene Reste bedeuten, die aus Wasserstoff -, bis zu 10 Kohlenstoffatomen und gegebenenfalls Stickstoff-, Sauerstoff- und/oder Schwefelatomen aufgebaut sind;
X gleiche oder verschiedene kondensationsfähige Gruppen, vorzugsweise Methoxy-, Ethoxy-, Methoxyethoxy-, Acetoxy- oder Chlorgruppen sind;
q eine ganze Zahl im Wert von 0, 1 oder 2 ist;
r eine ganze Zahl im Wert von 1, 2 oder 3 ist und die Summe von q und r maximal 3 beträgt.

**7.** Verfahren nach Anspruch 5 oder 6, dadurch gekennzeichnet, daß als Organosilan oder -siloxan ein aminofunktionelles Organosilan oder -siloxan eingesetzt wird.

**Claims**
**Claims for the following Contracting States : DE, FR, GB**

**1.** Process for the preparation of an organocyclosiloxane-containing mixture which is suitable as the starting material in the preparation of silicones of controlled viscosity, characterized in that the mixture of organocyclosiloxanes and varying amounts of shortchain, linear organosiloxanes which is produced as the distillate from the product mixture during the preparation of linear organopolysiloxanes is treated with condensation catalyst(s), except for carbonates and bicarbonates of potassium and caesium.

**2.** Process according to Claim 1, characterized in that the condensation catalyst(s) is (are) subsequently deactivated or removed from the mixture mentioned.

**3.** Process according to Claim 1 or 2, characterized in that at least 80 %, relative to their number, of the organic groups in the organocyclosiloxanes and shortchain, linear organosiloxanes which are bound directly to a silicon atom are methyl groups.

**4.** Process according to Claim 1, 2 or 3, characterized in that the condensation catalyst(s) employed are phosphonitrile chlorides.

**5.** Process for the preparation of polyorganosiloxane carrying functional groups, characterized in that the mixture obtained by the process according to Claim 1, 2, 3 or 4 is reacted with an organosilane or organosiloxane each of which carries at least one functional group and contains at least one group which is capable of condensation.

**6.** Process according to Claim 5, characterized in that the organosilane or organosiloxane employed is a silane of the formula

$$R_qR'_rSiX_{(4-q-r)} \quad (IV)$$

or an organosiloxane which is obtainable as a partial hydrolysate of an organosilane of this type, the radicals
R in the above formula having the meaning given in Claim 1,
R' denotes identical or different Si-C-bound radicals constructed from hydrogen, up to 10 carbon atoms and, optionally, nitrogen, oxygen and/or sulphur atoms;
X denotes identical or different groups which are capable of condensation, preferably methoxy, ethoxy, methoxy-ethoxy, acetoxy or chlorine groups;
q is an integer having the value 0, 1 or 2;
r is an integer having the value 1, 2 or 3, and the sum of q and r is a maximum of 3.

**7.** Process according to Claim 5 or 6, characterized in that the organosilane or organosiloxane employed is an amino-functional organosilane or organosiloxane.

**Claims for the following Contracting States : BE, NL**

**1.** Process for the preparation of an organocyclosiloxane-containing mixture which is suitable as the starting material in the preparation of silicones of controlled viscosity, characterized in that the mixture of organocyclosiloxanes and varying amounts of shortchain, linear organosiloxanes which is produced

as the distillate from the product mixture during the preparation of linear organopolysiloxanes is treated with condensation catalyst(s).

2. Process according to Claim 1, characterized in that the condensation catalyst(s) is (are) subsequently deactivated or removed from the mixture mentioned.

3. Process according to Claim 1 or 2, characterized in that at least 80 %, relative to their number, of the organic groups in the organocyclosiloxanes and shortchain, linear organosiloxanes which are bound directly to a silicon atom are methyl groups.

4. Process according to Claim 1, 2 or 3, characterized in that the condensation catalyst(s) employed are phosphonitrile chlorides.

5. Process for the preparation of polyorganisiloxane carrying functional groups, characterized in that the mixture obtainable by the process according to Claim 1, 2, 3 or 4 is reacted with an organosilane or organosiloxane each of which carries at least one functional group and contains at least one group which is capable of condensation.

6. Process according to Claim 5, characterized in that the organosilane or organosiloxane employed is a silane of the formula

$$R_qR'_rSiX_{(4-q-r)} \qquad (IV)$$

or an organosiloxane which is obtainable as a partial hydrolysate of an organosilane of this type, the radicals

R in the above formula having the meaning given in Claim 1,
R' denotes identical or different Si-C-bound radicals constructed from hydrogen, up to 10 carbon atoms and, optionally, nitrogen, oxygen and/or sulphur atoms;
X denotes identical or different groups which are capable of condensation, preferably methoxy, ethoxy, methoxy-ethoxy, acetoxy or chlorine groups;
q is an integer having the value 0, 1 or 2;
r is an integer having the value 1, 2 or 3, and the sum of q and r is a maximum of 3.

7. Process according to Claim 5 or 6, characterized in that the organosilane or organosiloxane employed is an aminofunctional organosilane or organosiloxane.

**Revendications**
**Revendications pour les Etats contractants suivants : DE, FR, GB**

1. Procédé de préparation de mélanges contenant des organocyclosiloxanes qui conviennent pour la fabrication de silicones ayant une viscosité réglée, procédé caractérisé en ce que l'on traite avec un ou plusieurs catalyseurs de condensation, à l'exception des carbonates et bicarbonates de potassium et de césium, le mélange d'organocyclosiloxanes et d'une proportion variable d'organosiloxanes linéaires à chaîne courte obtenu comme distillat du mélange de produits dans la préparation de polyorganosiloxanes linéaires.

2. Procédé selon la revendication 1, caractérisé en ce que le ou les catalyseurs de condensation sont ensuite désactivés ou éliminés du mélange.

3. Procédé selon la revendication 1 ou 2, caractérisé en ce que les groupes organiques des organocyclosiloxanes et des organosiloxanes linéaires à chaîne courte directement liés à un atome de silicium sont pour au moins 80 %, en nombre, des groupes méthyle.

4. Procédé selon la revendication 1, 2 ou 3, caractérisé en ce que l'on utilise comme catalyseurs de condensation des chloronitrures de phosphore.

5. Procédé de préparation de polyorganosiloxanes à groupes fonctionnels, procédé caractérisé en ce que l'on fait réagir le mélange obtenu selon la revendication 1, 2, 3 ou 4 avec un ou plusieurs organosilanes

ou organosiloxanes à groupes fonctionnels qui ont au moins un groupe capable de condensation.

6. Procédé selon la revendication 5, caractérisé en ce que l'organosilane ou l'organosiloxane est un silane de formule

$R_q R'_r SiX_{(4-q-r)}$ (IV)

ou un organosiloxane résultant d'une d'hydrolyse partielle d'un tel organosilane, dans la formule (IV)
- R ayant la signification indiquée pour la formule (I) précédente,
- R' représente des radicaux identiques ou différents à liaison Si-C, formés d'atomes d'hydrogène, d'atomes de carbone jusqu'à 10 et le cas échéant d'atomes d'azote, d'oxygène et/ou de soufre,
- X représente des groupes capables de condensation identiques ou différents, de préférence les groupes méthoxy, éthoxy, méthoxyéthoxy et acétoxy ou le chlore,
- q est le nombre 0, 1 ou 2,
- r le nombre 1, 2 ou 3, et
  la somme q + r est au maximum égale à 3.

7. Procédé selon la revendication 5 ou 6, caractérisé en ce que l'organosilane ou l'organosiloxane est un organosilane ou un organosiloxane à fonction amine.

**Revendications pour les Etats contractants suivants : BE, NL**

1. Procédé de préparation de mélanges contenant des organocyclosiloxanes qui conviennent pour la fabrication de silicones ayant une viscosité réglée, procédé caractérisé en ce que l'on traite avec un ou plusieurs catalyseurs de condensation le mélange d'organosiloxanes et d'une proportion variable d'organosiloxanes linéaires à chaîne courte obtenu comme distillat du mélange de produits dans la préparation de polyorganosiloxanes linéaires.

2. Procédé selon la revendication 1, caractérisé en ce que le ou les catalyseurs de condensation sont ensuite désactivés ou éliminés du mélange.

3. Procédé selon la revendication 1 ou 2, caractérisé en ce que les groupes organiques des organocyclosiloxanes et des organosiloxanes linéaires à chaîne courte directement liés à un atome de silicium sont pour au moins 80 %, en nombre, des groupes méthyle.

4. Procédé selon la revendication 1, 2 ou 3, caractérisé en ce que l'on utilise comme catalyseurs de condensation des chloronitrures de phosphore.

5. Procédé de préparation de polyorganosiloxanes à groupes fonctionnels, procédé caractérisé en ce que l'on fait réagir le mélange obtenu selon la revendication 1, 2, 3 ou 4 avec un ou plusieurs organosilanes ou organosiloxanes à groupes fonctionnels qui ont au moins un groupe capable de condensation.

6. Procédé selon la revendication 5, caractérisé en ce que l'organosilane ou l'organosiloxane est un silane de formule

$R_q R'_r SiX_{(4-q-r)}$ (IV)

ou un organosiloxane résultant d'une d'hydrolyse partielle d'un tel organosiloxane, dans la formule (IV)
- R ayant la signification indiquée pour la formule (I) précédente,
- R' représente des radicaux identiques ou différents à liaison Si-C, formés d'atomes d'hydrogène, d'atomes de carbone jusqu'à 10 et le cas échéant d'atomes d'azote, d'oxygène et/ou de soufre,
- X représente des groupes capables de condensation identiques ou différents, de préférence les groupes méthoxy, éthoxy, méthoxyéthoxy et acétoxy ou le chlore,
- q est le nombre 0, 1 ou 2,
- r le nombre 1, 2 ou 3, et
  la somme q + r est au maximum égale à 3.

7. Procédé selon la revendication 5 ou 6, caractérisé en ce que l'organosilane ou l'organosiloxane est un organo-silane ou un organosiloxane à fonction amine.